# EUROPÄISCHE PATENTSCHRIFT

(11) **EP 3 135 539 B1**
(45) Veröffentlichungstag und Bekanntmachung des Hinweises auf die Patenterteilung: **28.02.2018**
(21) Anmeldenummer: 16185142.3
(22) Anmeldetag: 22.08.2016
(51) Int. Cl.: B60R 9/06, B60R 9/10

(54) **LASTENTRÄGER FÜR EINE DEICHSEL EINES FAHRZEUGANHÄNGERS**
LOAD CARRIER FOR A DRAWBAR OF A VEHICLE TRAILER
SUPPORT DE CHARGE DE TIMON D'UNE REMORQUE DE VEHICULE

(30) Priorität: 26.08.2015 DE 102015114124
(43) Veröffentlichungstag der Anmeldung: 01.03.2017
(73) Patentinhaber: Fiamma S.p.A., 21010 Cardano al Campo (VA) (IT)
(72) Erfinder: Pozzi, John-David, 8004 Zürich (CH); Pozzi, Charles Philip, 20129 Mailand (IT)
(74) Vertreter: Kluin, Jörg-Eden

(56) Entgegenhaltungen:
- US-A- 3 754 672
- US-A- 6 129 371
- US-A1- 2008 085 176
- US-A1- 2009 120 981
- US-A1- 2015 076 200
- US-B1- 9 073 492

## Beschreibung

Die Erfindung betrifft einen Lastenträger für eine Deichsel eines Fahrzeuganhängers, insbesondere für die Deichsel eines Wohnwagens, mit einer an der Deichsel befestigbaren Montagestruktur, und mit einer um eine Schwenkachse zwischen einer Fahrposition und einer Parkposition verschwenkbar mit der Montagestruktur verbundenen Tragstruktur zur wahlweisen Befestigung einer Last, insbesondere zur wahlweisen Befestigung eines Fahrrades.

Die Deichsel eines Fahrzeuganhängers, insbesondere die Deichsel eines Wohnwagens, eignet sich zum Transport von Lasten, die weder in dem den Anhänger ziehenden Fahrzeug, noch in dem Anhänger selbst untergebracht werden sollen. Die Deichsel eignet sich somit insbesondere zum Transport solcher Lasten, die aufgrund ihrer Dimensionen nicht oder nur erschwert in dem Anhänger oder in dem Fahrzeug untergebracht werden können.

In der Praxis finden die Deichseln von Wohnwagen regelmäßig Verwendung, um Fahrräder zu transportieren.

Um zumindest ein Fahrrad sicher an der Deichsel befestigen zu können, ist aus der DE 20 2010 000 367 U1 ein Fahrradträger bekannt, der eine an der Deichsel befestigbare Montagestruktur und eine sich von dieser nach oben erstreckende Tragstruktur zur wahlweisen Befestigung mindestens eines Fahrrads umfasst. Da Wohnwagen regelmäßig einen von ihrer Frontseite her zugänglichen Stauraum, auch "Deichselkasten" genannt, umfassen, in dem beispielsweise Gasflaschen untergebracht sind, hat es sich als wünschenswert erwiesen, den Fahrradträger derart auszubilden, dass ein Zugang zu diesem Stauraum auch ohne vollständige Montage des Fahrradträgers möglich ist.

Aus der US 3,754,672 A ist ein Fahrzeug-Heckträger bekannt, bei dem zum Auf- und Abladen eines Motorrads eine Tragstruktur gegenüber einer Montagestruktur über eine Führungshülse translatorisch höhenverstellbar gelagert ist. Aufgrund der Anordnung der Montagestruktur sowie des Motorrads an sich ist jedoch selbst bei einer Höhenverlagerung ein Zugang zu einem dahinterliegenden Stauraum nicht ohne ein Abladen des Motorrads und/oder einer Demontage der Montagestruktur möglich.

Von der Anmelderin ist daher ein unter der Bezeichnung "Caravan XL A PRO" vertriebener Fahrradträger bekannt, bei welchem die Tragstruktur um eine in Betriebsstellung des Fahrradträgers etwa horizontal verlaufende Achse verschwenkbar zwischen einer Fahrposition und einer Parkposition mit der Montagestruktur verbunden ist. Der Stauraum kann daher auch bei auf der Deichsel montiertem Fahrradträger zugänglich gemacht werden, gegebenenfalls sogar mit zumindest einem an ihm montierten Fahrrad, indem die Tragstruktur aus ihrer Fahrposition, in der sich das Fahrrad in einer zumindest im Wesentlichen aufrechten Position befindet, in eine Parkposition, in der sich das Fahrrad in einer deutlich aus dieser aufrechten Position geneigten, meist zumindest nahezu liegenden Position befindet, um die Schwenkachse verschwenkt wird.

Ferner sind Fixiermittel, mit denen die Tragstruktur wahlweise in verschiedenen Winkelpositionen beim Verschwenken aus der Fahrposition gegenüber einem Weiterverschwenken fixierbar ist, bekannt. Dadurch kann verhindert werden, dass die Tragstruktur um einen unerwünscht großen Winkel aus der Fahrposition um die Schwenkachse verschwenkt wird. Hierdurch lässt sich beispielsweise vermeiden, dass die Tragstrukturen und/oder eine an ihr befestigte Last, beispielsweise zumindest ein Fahrrad, durch zu weites Verschwenken mit Teilen des Anhängers und/oder des Zugfahrzeugs kollidieren, was zu Beschädigungen an den kollidierenden Teilen oder schlimmstenfalls sogar zu Verletzungen von Körperteilen, die sich zwischen diesen Teilen befinden, führen könnte.

Aus der US 6,129,371 A ist ein gattungsbildender Lastenträger bekannt, bei dem eine eine Last tragende Tragstruktur gegenüber einer am Fahrzeug befestigten Montagestruktur verschwenkbar ausgebildet und in verschiedenen Winkelpositionen mittels eines Bolzens fixierbar ist. Nachteilig hierbei ist, dass bei einem zum Verschwenken herausgenommenen Bolzen die Tragstruktur gegenüber der Montagestruktur frei schwenkbar ist und von einer Person aktiv gebremst oder gehalten werden muss, welches einen relativ hohen Kraftaufwand erfordert und dadurch relativ unkomfortabel ist, und welches - insbesondere bei schweren Lasten - eine Verletzungsgefahr für einen, insbesondere hinter dem Heckträger befindlichen, Bediener darstellen kann.

Aus der US 2008/0085176 A1 ist ein Fahrzeug-Heckträger mit einer gegenüber einer Montagestruktur mittels eines Druckzylinders kraftunterstützend schwenkbar gelagerten Tragstruktur bekannt. Ein solcher Träger weist jedoch einen relativ komplexen Hebemechanismus sowie ein relativ hohes Gewicht auf, und ist dadurch im Betrieb relativ wartungsintensiv und in der Herstellung relativ kostenintensiv.

Der Erfindung liegt die Aufgabe zugrunde, einen derartigen Lastenträger, insbesondere Fahrradträger, hinsichtlich seiner Funktionalität weiter zu verbessern. Diese Aufgabe wird durch die in Anspruch 1 wiedergegebene Erfindung gelöst. Die Fixiermittel umfassen erfindungsgemäß ein sich besonders bevorzugt zwischen der Montagestruktur und der Tragstruktur erstreckendes, flexibles Zugelement. Aufgrund dieser Fixiermittel ist es möglich, die Trag-struktur sehr kontrolliert gegenüber der Montagestruktur zu verschwenken.

Ist dieses - wie besonders bevorzugt - einenends mit Abstand von der Schwenkachse an der Montagestruktur, anderenends mit Abstand von der Schwenkachse an der Tragstruktur befestigt, so ist die Tragstruktur gegenüber der Montagestruktur wahlweise in verschiedenen, aus der Fahrposition verschwenkten Winkelpositionen fixierbar, indem die wirksame Länge des flexiblen Zugelements verändert wird.

Besonders bevorzugt ist hierzu eine Weiterbildung des erfindungsgemäßen Lastenträgers, bei der zumindest ein Ende des flexiblen Zugelements an einer Wickeltrommel derart befestigt ist, dass das flexible Zugelement durch Drehbetätigung der Wickeltrommel auf diese aufwickelbar ist. Die verschiedenen Winkelpositionen, in denen die Tragstruktur gegenüber der Montagestruktur fixierbar ist, sind dann durch verschieden weites Auf- oder Abwickeln des flexiblen Zugelements definiert.

Wegen der besonders einfachen Betätigbarkeit ist eine Weiterbildung des erfindungsgemäßen Lastenträgers besonders bevorzugt, bei welcher die Wickeltrommel mit einem eine Antriebsfeder aufweisenden Federmotor derart wirkverbunden ist, dass die Spannung der Feder bei einer Rotation der Wickeltrommel im Sinne des Abwickelns des flexiblen Zugelements erhöht wird. Aufgrund dieser Maßnahme ist ein Verschwenken der Tragstruktur aus der Fahrposition nur unter Überwindung der durch die Antriebsfeder auf das flexible Zugelement ausgeübten Zugkraft möglich. Hierdurch erfolgt einerseits ein Aufwickeln des flexiblen Zugelements auf die Wickeltrommel selbsttägig, wenn die Tragstruktur aus einer aus der Fahrposition ausgelenkten Position zurückgeschwenkt wird. Durch Auslegung der Antriebsfeder kann die durch diese auf das flexible Zugelement ausgeübte Zugkraft so groß gewählt werden, dass diese Zugspannung einem "Abkippen" der Tragstruktur aus einer aus der Fahrposition verschwenkten Winkellage wirksam entgegengewirkt wird, wodurch das Handling des erfindungsgemäßen Lastenträgers weiter erleichtert ist.

Bei einer weiterhin bevorzugten Ausführungsform des erfindungsgemäßen Lastenträgers sind Arretiermittel zur wahlweisen Arretierung der Wickeltrommel gegen eine Rotation derselben im Sinne des Abwickelns des flexiblen Zugelements vorgesehen. Eine Fixierung der Tragstruktur in einer aus der Fahrposition verschwenkten Lage kann dann sehr einfach dadurch erfolgen, dass nach Erreichen der gewünschten Winkellage diese Arretiermittel aktiviert werden.

Bei einer besonders bevorzugten, konstruktiven Ausbildung weisen die Arretiermittel ein Sperrrad und eine Sperrklinke auf. Das Sperrrad und die Sperrklinke sind derart ausgebildet, dass ein Verschwenken der Tragstruktur in Richtung zur Parkposition nur dann möglich ist, wenn diese Arretiermittel durch Außereingriffbringen der Sperrklinke aus dem Sperrrad entriegelt sind. Beim Rückschwenken der Tragstruktur in die Fahrposition unter selbsttätigem Aufwickeln des flexiblen Zugelements auf die Wickeltrommel ist dann auf besonders einfache Weise möglich, da es hierzu - mit Ausnahme des eigentlichen Verschwenkens - keiner von einer Bedienperson zu erbringender Maßnahmen bedarf.

Um die Arretiermittel zu entarretieren, im Falle eines Sperrrades und einer Sperrklinke letztere außer Eingriff mit dem Sperrrad zu bringen, weist eine besonders bevorzugte Weiterbildung des erfindungsgemäßen Lastenträgers eine Tastenanordnung auf, die - besonders bevorzugt - einen in Fahrposition der Tragstruktur von oben betätigbaren Taster umfasst. In diesem Falle lässt sich die Tragstruktur aus der Fahrposition heraus um die Schwenkachse verschwenken, solange die Bedienposition diesen - besonders gut zugänglichen - Taster betätigt. Durch Loslassen desselben wird der Verschwenkvorgang sofort gegen ein Weiterverschwenken arretiert. Hierdurch weist der erfindungsgemäße Lastenträger eine besonders hohe Betriebssicherheit auf, da der Verschwenkvorgang jederzeit unterbrochen werden kann und auch sofort beendet ist, wenn die Bedienposition beispielsweise von dem Taster versehentlich abrutscht.

Bei dem flexiblen Zugelement kann es sich insbesondere um ein textiles Gurtband handeln, welches einerseits robust und trotzdem kostengünstig ist, andererseits auch nicht sogleich Beschädigungen hervorruft, sollte es mit Teilen des Anhängers und/oder der zu transportierenden Lasten in Berührung kommen.

In der Zeichnung ist ein bevorzugtes Ausführungsbeispiel des erfindungsgemäßen Lastenträgers am Beispiel eines für den Transport von zwei Fahrrädern auf der Deichsel eines Wohnwagens vorgesehenen Fahrradträgers dargestellt. Es zeigen:
- Fig. 1: eine schematische Darstellung eines Wohnwagens, an dessen Deichsel der Fahrradträger befestigt ist, wobei sich die Tragstruktur in einer Parkposition befindet;
- Fig. 2: eine vergrößerte Darstellung des Deichselbereichs dieses Wohnwagens in einer perspektivischen Ansicht;
- Fig. 3: eine perspektivische Einzeldarstellung des Fahrradträgers mit in Parkposition befindlicher Tragstruktur;
- Fig. 4: denselben Fahrradträger in einer Fig. 3 entsprechenden Perspektive, jedoch bei in Fahrposition befindlicher Tragstruktur;
- Fig. 5: denselben Fahrradträger bei in Fahrposition befindlicher Tragstruktur, jedoch in einer Ansicht in Blickrichtung A in Fig. 4;
- Fig. 6: den Ausschnitt X in Fig. 4 in einer vergrößerten Darstellung;
- Fig. 7: eine Fig. 4 entsprechende Ansicht des Fahrradträgers, wobei ein Teil eines die Wickeltrommel umgebenden Gehäuses entfernt dargestellt ist;

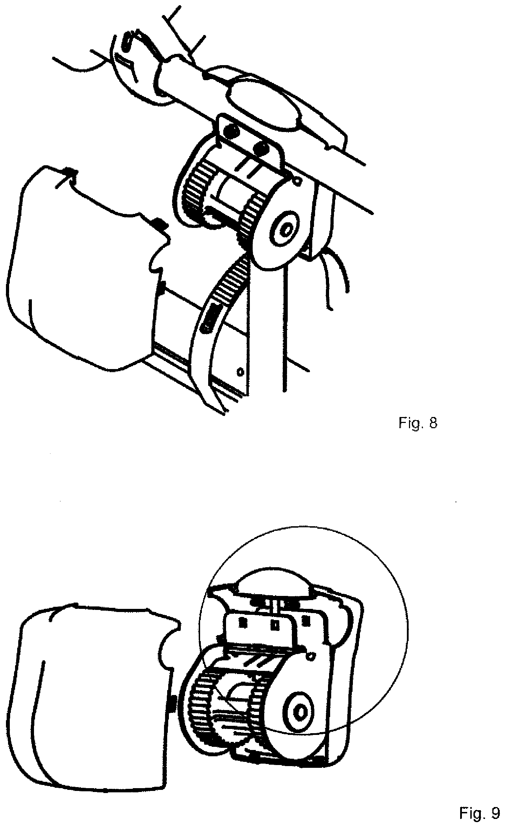

- Fig. 8: den Ausschnitt Y in Fig. 7 in einer vergrößerten Darstellung;
- Fig. 9: eine perspektivische Einzeldarstellung der die Wickeltrommel umfassenden Wickeleinrichtung mit abgenommenem Gehäuseteil;

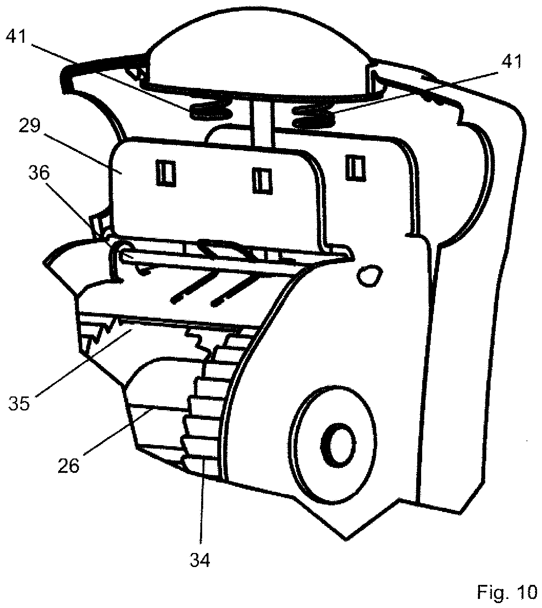

- Fig. 10: den Ausschnitt Z in Fig. 9 in einer vergrößerten Darstellung sowie

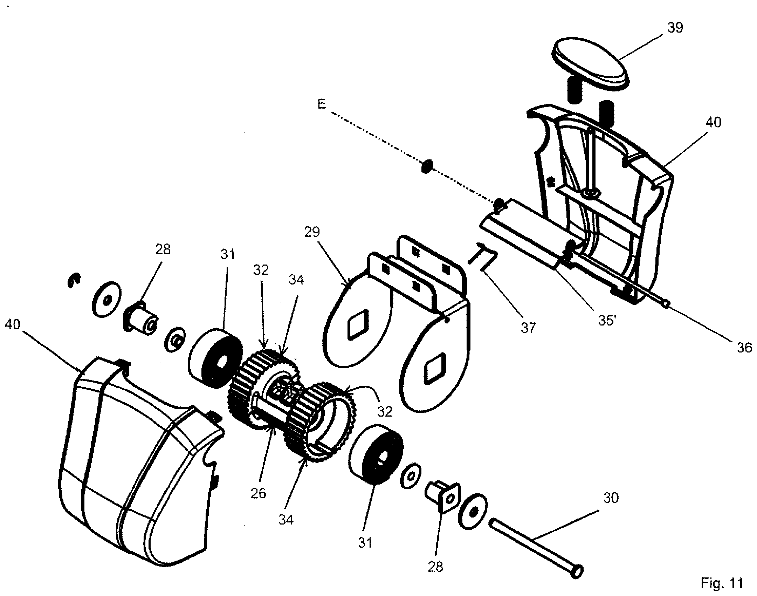

- Fig. 11: die Wickeleinrichtung in einer perspektivischen Explosionsdarstellung.

Der in der Zeichnung als Ganzes mit 100 bezeichnete Lastenträger ist bei dem dargestellten Ausführungsbeispiel als Fahrradträger zum Transport von zwei Fahrrädern und zur Montage an einer Deichsel 1 eines Wohnwagens 2 ausgebildet.

Der Lastenträger 100 umfasst eine Montagestruktur 3, die ein etwa U-förmig gebogenes Rohrteil 4, dessen freie Schenkel 5 jeweils eine Abwinkelung 6 aufweisen. Ferner umfasst die Montagestruktur 3 einen die beiden Schenkel 5 verbindenden Tragbalken 7, der etwa parallel zu den die beiden Schenkel 5 verbindenden Rohrteil 8 verläuft.

Sowohl das Rohrteil 8, als auch der Tragbalken 7 umfasst jeweils zwei Spannbügel 9, die der Befestigung der Montagestruktur an der Deichsel 1 des Wohnwagens 2 dienen.

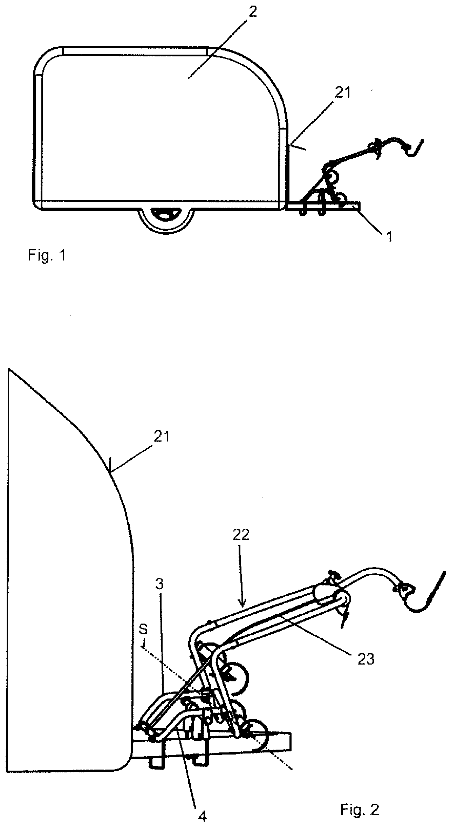

An den freien Schenkeln 5 der Montagestruktur 3 ist eine Tragstruktur 10 um eine Schwenkachse S verschwenkbar angelenkt. Die Schwenkachse S verläuft etwa parallel zum Tragbalken 7 bzw. zum Rohrteil 8 und damit - wie aus Fig. 1 ersichtlich - bei symmetrischer Montage auf der Deichsel 1 des Wohnwagens 2 etwa parallel zur gemeinsamen Drehachse von dessen beiden Rädern.

Die Tragstruktur umfasst ein Rohrteil 11. Es weist einen etwa U-förmigen ersten Bereich 12 sowie einen an die beiden freien Schenkel 13 des ersten Bereichs 12 anschließenden zweiten Bereich 14 auf. Der zweite Bereich 14 ist etwa W-förmig ausgebildet. Die von ihm aufgespannte Ebene steht etwa senkrecht zu der vom ersten Bereich 12 aufgespannten Ebene.

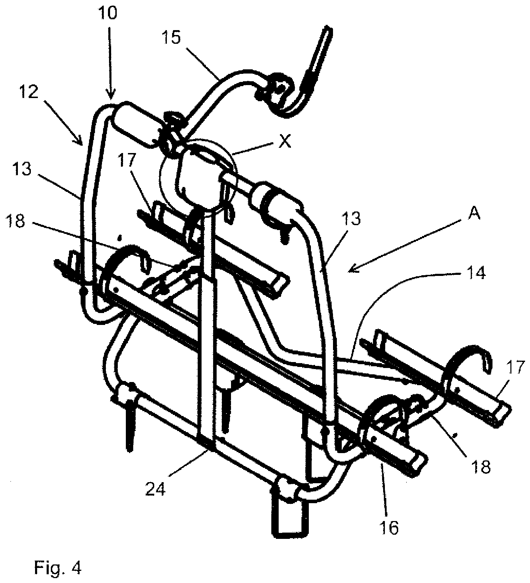

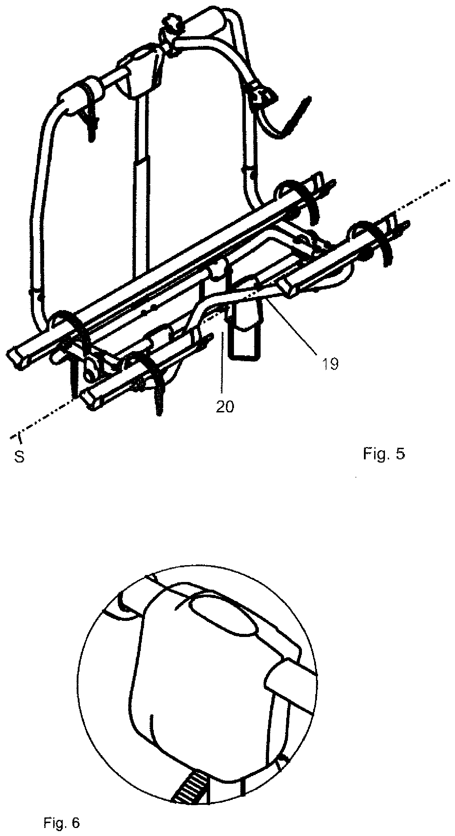

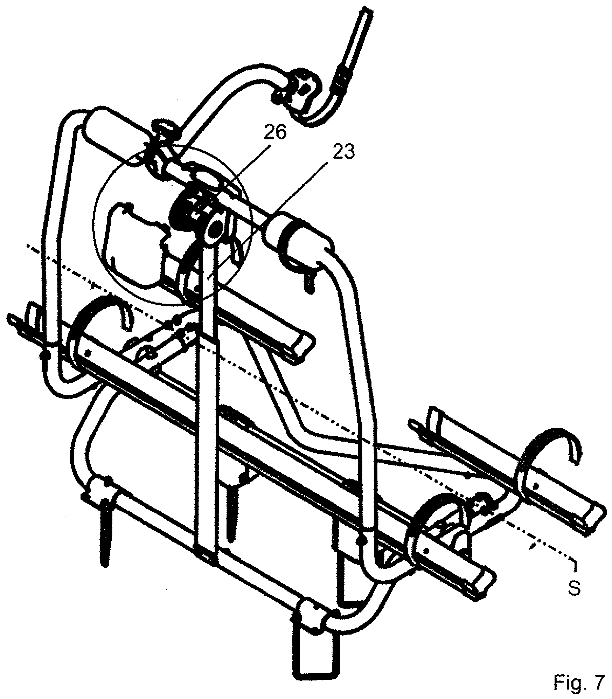

In Fig. 4, 5 und 7 ist der Lastenträger 100 bei in einer sogenannten "Fahrposition" befindlichen Tragstruktur dargestellt. Mit "Fahrposition" ist diejenige Position gemeint, in der sich die Tragstruktur 10 zumindest dann befindet, wenn der Wohnwagen 2 in Fahrt ist. In dieser Fahrposition befindet sich der erste Bereich 12 in einer aufrechten Position, der zweite Bereich 14 etwa in einer dazu senkrechten, etwa liegenden Position.

An dem ersten Bereich 12 stützen sich - bei dem dargestellten Ausführungsbeispiel - ein oder zwei Fahrräder unmittelbar oder mittelbar über einen Distanzbügel 15 ab. An dem zweiten Bereich sind Tragschienen 16, 17 vorgesehen, die dem Abstützen der Räder der zu transportierenden Fahrräder dienen. Die von dem ersten Bereich 12 entfernte Tragschiene 17 ist zweigeteilt, die einander zugewandten Enden der beiden Teile sind voneinander beabstandet und das zwei Schenkel 18 des zweiten Bereichs 14 verbindende Rohrteil 19 weist eine durch die Basis des "W" gebildete Einbuchtung 20 auf.

Die Tragstruktur 10 kann durch Verschwenken um die Schwenkachse S aus der Fahrposition in eine in Fig. 1 bis 3 dargestellte Parkposition verschwenkt werden. Mit "Parkposition" ist eine Position gemeint, in welche die Tragstruktur allenfalls dann gebracht wird, wenn sich der Wohnwagen 2 nicht in Fahrt befindet.

In der Parkposition befindet sich die Tragstruktur 10 in einer deutlich aus der etwa senkrechten Fahrposition heraus verlagerten Stellung. Wie in Fig. 1 und 2 erkennbar ist, ist in dieser Position die Vorderseite 21 des Wohnwagens 2 und somit ein in dieser möglicherweise vorhandener Stauraum besser zugänglich. Die Einbuchtung 20 und die Unterteilung der Tragschiene 17 helfen dabei, eine Kollision dieser Bauteile mit der Deichsel 1 zu vermeiden.

Um die Tragstruktur 10 aus ihrer Fahr- in die Parkposition zu verlagern, müssen zunächst gravitationsbedingte Rückstellkräfte manuell überwunden werden, bis sich der Schwerpunkt der Tragstruktur und gegebenenfalls an dieser befestigten Lasten in Schwenkrichtung gesehen vor der Schwenkachse S befindet. Hiernach bewirkt die Gravitation ein selbsttätiges Weiterverschwenken.

Um hierbei ein unkontrolliertes Weiterverschwenken und ungewollte Kollisionen der Tragstruktur und/oder von ihr getragenen Lasten mit anderen Gegenständen oder gar Verletzungen der Bedienperson zu vermeiden, sind Fixiermittel 22 vorgesehen, mit denen die Verschwenkbewegung aus der Fahrposition in die Parkposition kontrollierbar ist. Diese Fixiermittel 22 umfassen ein flexibles Zugelement 23, dessen erstes Ende 24 unmittelbar an dem Rohrteil 8 der Montagestruktur 3 und somit mit senkrechtem Abstand zur Schwenkachse S befestigt ist, und dessen zweites Ende 25 über eine Wickeltrommel 26 an einem die Schenkel 13 des ersten Bereichs 12 des Rohrteils 11 verbindenden Rohrteil 27 befestigt ist. Das flexible Zugelement kann als Gurtband ausgebildet sein. Die Wickeltrommel 26 ist in einem Wickeltrommelträger 29 um eine Drehachse D, die durch einen Achsstift 30 definiert ist, drehbar gelagert. Der Wickeltrommelträger selbst ist fest mit dem Rohrteil 27 beispielsweise durch vernieten verbunden. Die Wickeltrommel ist mit einem Federmotor wirkverbunden, der zwei Antriebsfedern 31 aufweist, die beidseits der Wickeltrommel angeordnet und mit Hilfe von Lagerteilen 28 gelagert sind. Die Antriebsfedern 31 sind als Spiralfedern ausgebildet, die um die Lagerteile 28 gewickelt sind. Das jeweils innere Ende der Antriebsfedern 31 greift in eine Ausnehmung jeweils eines der Lagerteile 28 ein, das drehfest im Wickeltrommelträger 29 ruht. Das innere Ende jeder Spiralfeder ist somit bezüglich des Achsstifts 30 drehfest gelagert.

Jede Antriebsfeder 31 ist von einer etwa topf-förmigen Erweiterung 32 der Wickeltrommel 26 umgeben. Das äußere Ende einer jeden Antriebsfeder ragt in eine Ausnehmung 33 in der Erweiterung 32 derart ein, dass das äußere Ende bei einer Drehbetätigung der Wickeltrommel im Sinne eines Abwickelns des flexiblen Zugelements gespannt wird.

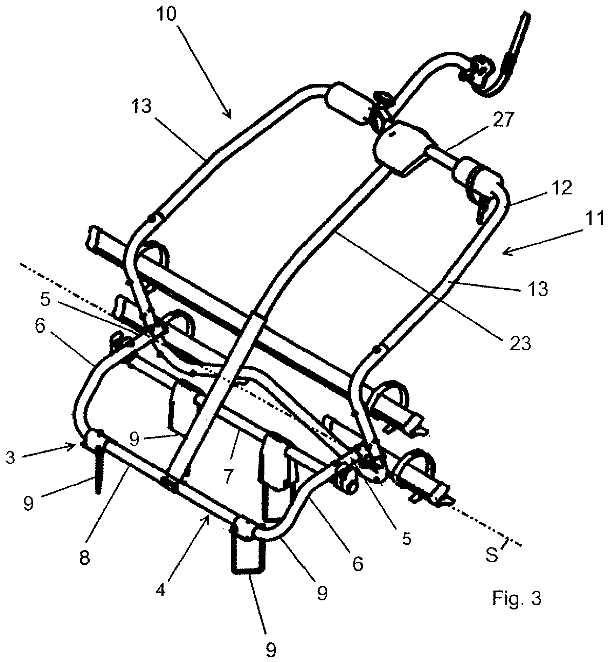

Wie durch Vergleich beispielsweise der Fig. 3 und 4 ersichtlich ist, erfolgt hierdurch ein Spannen der Antriebsfedern, wenn die Tragstruktur 10 aus der in Fig. 4 dargestellten Fahrposition in die in Fig. 3 dargestellte Parkposition verlagert wird. Das flexible Zugelement 23 ist somit aufgrund der Federkraft während des Verschwenkens zwischen der Fahr- und der Parkposition ständig gespannt.

Um die Tragstruktur 10 in nahezu jeder Winkellage beim Verlagern aus der Fahrposition gegen ein Weiterverschwenken in Richtung der Parkposition arretieren zu können, sind die äußeren Umfänge der Erweiterungen 32 jeweils mit einer Verzahnung 34 versehen als Sperrrad 35 ausgebildet. Eine Sperrklinke 35' ist mit Hilfe eines Achsstifts 36 an dem Wickeltrommelträger 29 um eine Achse E verschwenkbar gelagert. Die Verzahnungen 34 sind derart sägezahnförmig ausgebildet, und die Sperrklinke 35' ist mit Hilfe einer Drahtfeder 37 derart vorgespannt, dass sie sich unter der Wirkung der Drahtfeder 37 mit der Verzahnung 34 in Eingriff befindet und die Wickeltrommel in dem dem Abwickelvorgang des flexiblen Zugelements entsprechenden Drehsinne blockiert, eine Drehung der Wickeltrommel im umgekehrten Drehsinne unter Wirkung der Antriebsfedern 31 jedoch erlaubt.

Damit die durch das Sperrrad 35 und die Sperrklinke 35' hervorgerufene Blockade der Wickeltrommel aufgehoben werden kann, was erforderlich ist, um eine Verschwenkung der Tragstruktur aus der Fahrposition heraus vornehmen zu können, ist eine Tasteranordnung 38 vorgesehen. Sie umfasst einen Taster 39, der in einem die Wickeltrommel und den Wickeltrommelträger im Wesentlichen umgebenden, zweiteiligen Gehäuse 40 gelagert ist. Der Taster 39 ist so angeordnet, dass er bei sich in Fahrposition befindlicher Tragstruktur nach oben weist. Er ist nach unten über Schraubenfedern 41 an dem Wickeltrommelträger 29 abgestützt. Er wirkt auf ein Betätigungselement 42, welches sich auf einem Bereich der Sperrklinke 35' abstützt, der sich auf einer bezüglich der Achse E anderen Seite der Sperrklinke 35' befindet, d.h. derjenigen Seite, die sich nicht im Eingriff mit den Sperrrädern 35 befindet. Durch Druckbetätigung des Tasters 39 wird somit die Sperrklinke 35' um die Achse T derart geschwenkt, dass sie außer Eingriff mit den Verzahnungen 34 gebracht wird.

### Bezugszeichenliste:

- 100: Lastenträger
- 1: Deichsel
- 2: Wohnwagen
- 3: Montagestruktur
- 4: Rohrteil
- 5: Schenkel
- 6: Abwinkelung
- 7: Tragbalken
- 8: Rohrteil
- 9: Spannbügel
- 10: Tragstruktur
- 11: Rohrteil
- 12: erster Bereich
- 13: Schenkel
- 14: zweiter Bereich
- 15: Distanzbügel
- 16: Tragschiene
- 17: Tragschiene
- 18: Schenkel
- 19: Rohrteil
- 20: Einbuchtung
- 21: Vorderseite
- 22: Fixiermittel
- 23: flexibles Zugelement
- 24: erstes Ende
- 25: zweites Ende
- 26: Wickeltrommel
- 27: Rohrteil
- 28: Lagerteile
- 29: Wickeltrommelträger
- 30: Achsstift
- 31: Antriebsfeder
- 32: Erweiterung
- 33: Ausnehmung
- 34: Verzahnung
- 35: Sperrrad
- 35': Sperrklinke
- 36: Achsstift
- 37: Drahtfeder
- 38: Tasteranordnung
- 39: Taster
- 40: Gehäuse
- 41: Schraubenfedern
- 42: Betätigungselement

- A: Blickrichtung
- D: Drehachse
- E: Achse
- S: Schwenkachse
- X: Ausschnitt
- Y: Ausschnitt
- Z: Ausschnitt

## Patentansprüche

1. Lastenträger (100) für eine Deichsel (1) eines Fahrzeuganhängers, insbesondere für die Deichsel eines Wohnwagens (2),
mit einer an der Deichsel (1) befestigbaren Montagestruktur (3),
mit einer um eine Schwenkachse (S) zwischen einer Fahrposition und einer Parkposition verschwenkbar mit der Montagestruktur (3) verbundenen Trag-struktur (10) zur wahlweisen Befestigung zumindest eines Fahrrades, wobei sich das Fahrrad in der Fahrposition in einer zumindest im Wesentlichen aufrechten Position und in der Parkposition in einer deutlich aus dieser aufrechten Position geneigten, meist zumindest nahezu liegenden, Position befindet, und mit Fixiermitteln (22), mit denen die Tragstruktur (10) wahlweise in verschiedenen Winkelpositionen beim Verschwenken aus der Fahrposition gegenüber einem Weiterverschwenken fixierbar ist,
**dadurch gekennzeichnet,**
**dass** die Fixiermittel (22) ein sich vorzugsweise zwischen der Montagestruktur (3) und der Tragstruktur (10) erstreckendes flexibles Zugelement (23) umfassen.

2. Lastenträger nach Anspruch 1, **dadurch gekennzeichnet, dass** das flexible Zugelement (23) einenends mit Abstand von der Schwenkachse (S) an der Montagestruktur (3), andernends mit Abstand von der Schwenkachse (S) an der Tragstruktur (10) befestigt ist.

3. Lastenträger nach Anspruch 1 oder 2, **dadurch gekennzeichnet, dass** zumindest ein Ende des flexiblen Zugelements (23) an einer Wickeltrommel (26) derart befestigt ist, dass das flexible Zugelement (23) durch Drehbetätigung der Wickeltrommel (26) auf diese aufwickelbar ist.

4. Lastenträger nach Anspruch 3, **dadurch gekennzeichnet, dass** die Wickeltrommel (26) mit einem eine Antriebsfeder (31) aufweisenden Federmotor derart wirkverbunden ist, dass die Spannung der Antriebsfeder (31) bei einer Rotation der Wickeltrommel (26) im Sinne des Abwickelns des flexiblen Zugelements (23) erhöht wird.

5. Lastenträger nach Anspruch 3 oder 4, **dadurch gekennzeichnet, dass** Arretiermittel zum wahlweisen Arretieren der Wickeltrommel (26) gegen eine Rotation der Wickeltrommel (26) im Sinne des Abwickelns des flexiblen Zugelements (23) vorgesehen sind.

6. Lastenträger nach Anspruch 5, **dadurch gekennzeichnet, dass** die Arretiermittel ein Sperrrad (35) und eine Sperrklinke (35') umfassen.

7. Lastenträger nach Anspruch 5 oder 6, **dadurch gekennzeichnet, dass** eine Tasteranordnung vorgesehen ist, durch deren Betätigung die wahlweise Arretierung der Wickeltrommel aufhebbar ist.

8. Lastenträger nach Anspruch 7, **dadurch gekennzeichnet, dass** die Tasteranordnung (38) einen in Fahrposition der Tragstruktur (10) von oben betätigbaren Taster (39) umfasst.

9. Lastenträger nach einem der voranstehenden Ansprüche, **dadurch gekennzeichnet, dass** das flexible Zugelement (23) ein vorzugsweise textiles Gurtband ist.

## Claims

1. A load carrier (100) for a drawbar (1) of a vehicle trailer, in particular, for the drawbar of a caravan (2),
having a mount structure (3) that can be fastened to the drawbar (1),
having a support structure (10) that can be pivoted about a pivot axis (S) between a drive position and a park position and is connected to the mount structure (3), for selectively fastening at least one bicycle, wherein the bicycle is in an at least substantially upright position when in the drive position, and is in a position that is significantly inclined from this upright position-usually an at least approximately lying position-when in the park position, and
having fixing means (22) with which the support structure (10) can selectively be fixed, against further pivoting, in different angular positions in the event of pivoting from the drive position,
**characterized in that**
the fixing means (22) comprise a flexible pulling element (23) preferably extending between the mount structure (3) and the support structure (10).

2. The load carrier according to claim 1, **characterized in that** the flexible pulling element (23) is fastened on one end to the mount structure (3) so as to be spaced apart from the pivot axis (S), and on the other end to the support structure (10) so as to be spaced apart from the pivot axis (S).

3. The load carrier according to claim 1 or 2, **characterized in that** at least one end of the flexible pulling element (23) is fastened to a winding drum (26) so that the flexible pulling element (23) can be wound onto the winding drum (26) by rotational actuation thereof.

4. The load carrier according to claim 3, **characterized in that** the winding drum (26) is operatively connected to a spring motor, which has a drive spring (31), in such a manner that the tension of the drive spring (31) increases when the winding drum (26) is rotated in the direction of unwinding of the flexible pulling element (23).

5. The load carrier according to claim 3 or 4, **characterized in that** locking means for selectively locking the winding drum (26) against rotation of the winding drum (26) in the direction of unwinding of the flexible pulling element (23) are provided.

6. The load carrier according to claim 5, **characterized in that** the locking means comprise a gear (35) and a pawl (35').

7. The load carrier according to claim 5 or 6, **characterized in that** a button arrangement that can be actuated to thereby release the selective locking of the winding drum is provided.

8. The load carrier according to claim 7, **characterized in that** the button arrangement (38) comprises a button (39) that can be actuated from above into the drive position of the support structure (10).

9. The load carrier according to any of the preceding claims, **characterized in that** the flexible pulling element (23) is a belt, preferably a textile one.

## Revendications

1. Porte-charge (100) destiné à un timon (1) d'une remorque de véhicule, en particulier le timon d'une caravane (2), comprenant
une structure de montage (3) qui peut être fixée au timon (1),
une structure de support (10) reliée à la structure de montage (3) de manière pivotante sur un axe de pivotement (S) entre une position de roulement et une position de stationnement pour fixer sélectivement au moins une bicyclette, la bicyclette se trouvant, dans la position de roulement, dans une position au moins sensiblement verticale et, dans la position de stationnement, dans une position nettement inclinée, le plus souvent au moins presque couchée, par rapport à cette position verticale, et
des moyens de fixation (22) à l'aide desquels la structure de support (10) peut être fixée sélectivement dans différentes positions angulaires, lors du pivotement depuis la position de roulement, afin de ne pas pivoter davantage,
**caractérisé en ce que**
les moyens de fixation (22) comportent un élément de traction flexible (23) s'étendant de préférence entre la structure de montage (3) et la structure de support (10).

2. Porte-charge selon la revendication 1, **caractérisé en ce que** l'élément de traction flexible (23) est fixé par une extrémité, à distance de l'axe de pivotement (S), à la structure de montage (3), et par l'autre extrémité, à distance de l'axe de pivotement (S), à la structure de support (10).

3. Porte-charge selon la revendication 1 ou 2, **caractérisé en ce qu'**au moins une extrémité de l'élément de traction flexible (23) est fixée à un tambour d'enroulement (26) de telle sorte que l'élément de traction flexible (23) puisse être enroulée sur le tambour d'enroulement (26) par une action de rotation de celui-ci.

4. Porte-charge selon la revendication 3, **caractérisé en ce que** le tambour d'enroulement (26) est relié fonctionnellement à un moteur à ressort muni d'un ressort d'entraînement (31) de telle sorte que la tension du ressort d'entraînement (31) soit augmentée lors d'une rotation du tambour d'enroulement (26) dans le sens du déroulement de l'élément de tension flexible (23).

5. Porte-charge selon la revendication 3 ou 4, **caractérisé en ce que** des moyens de blocage destinés à bloquer en option le tambour d'enroulement (26) sont prévus pour empêcher le tambour d'enroulement (26) de tourner dans le sens du déroulement de l'élément de traction flexible (23).

6. Porte-charge selon la revendication 5, **caractérisé en ce que** les moyens de blocage comprennent une roue à cliquet (35) et un cliquet (35').

7. Porte-charge selon la revendication 5 ou 6, **caractérisé en ce qu'**un ensemble formant bouton-poussoir est prévu pour pouvoir supprimer, par actionnement de celui-ci, le blocage optionnel du tambour d'enroulement.

8. Porte-charge selon la revendication 7, **caractérisé en ce que** l'ensemble formant bouton-poussoir (38) comprend un bouton-poussoir (39) actionnable depuis le haut lorsque la structure de support (10) est dans la position de roulement.

9. Porte-charge selon l'une des revendications précédentes, **caractérisé en ce que** l'élément de traction flexible (23) est de préférence une sangle textile.
